# EUROPEAN PATENT SPECIFICATION

(11) **EP 3 103 242 B1**
(45) Date of publication and mention of the grant of the patent: **17.06.2020**
(21) Application number: 15708919.4
(22) Date of filing: 02.02.2015
(51) Int. Cl.: H04W 12/06, H04W 12/04, H04L 29/06, H04W 4/02

(54) **SECURELY DETERMINING THE LOCATION OF A USER**
SICHERE ORTSBESTIMMUNG EINES BENUTZERS
DÉTERMINATION D'UNE POSITION GÉOGRAPHIQUE D'UN UTILISATEUR

(30) Priority: 07.02.2014 US 201414175470
(43) Date of publication of application: 14.12.2016
(73) Proprietor: Microsoft Technology Licensing, LLC, Redmond, WA 98052-6399 (US)
(72) Inventor: SCOTT, James William, Redmond, Washington 98052-6399 (US); MASSIMI, Michael Anthony, Redmond, Washington 98052-6399 (US); O'HARA, Kenton Paul Anthony, Redmond, Washington 98052-6399 (US); KAY, Matthew, Redmond, Washington 98052-6399 (US)
(74) Representative: CMS Cameron McKenna Nabarro Olswang LLP
(86) International application number: PCT/US2015/014021
(87) International publication number: WO 2015/119870

(56) References cited:
- EP-A1- 1 696 626
- WO-A1-2004/095857
- WO-A2-2004/012424

## Description

### BACKGROUND

The proliferation of smartphones had led to development of web-based applications ('web apps') which are used by users to request services, such as ordering food from a restaurant. In some examples, payment may be taken through the web app prior to the service being provided, e.g. prior to the food being cooked and delivered. In other examples, however, the service may be provided ahead of payment and in such examples the service provider may wish to have some assurance that the customer will ultimately pay for the service.

WO2004/012424, EP1696626 and WO2004/095857 disclose methods and systems for determining the location of a wireless device.

The embodiments described below are not limited to implementations which solve any or all of the disadvantages of known methods of identifying and/or locating users.

### SUMMARY

The invention relates to a system and a method as defined in independent claims 1 and 6, respectively.

Various embodiments are defined in the dependent claims.

### BRIEF DESCRIPTION OF THE DRAWINGS

The present description will be better understood from the following detailed description read in light of the accompanying drawings, wherein:
FIG. 1 is a schematic diagram of a system for securely and precisely determining the physical location of a user;
FIG. 2 shows five schematic diagrams of different example situated device docks;
FIG. 3 shows three flow diagrams which illustrate an example method of operation of the system shown in FIG. 1;
FIG. 4 shows message flows between elements within the system shown in
FIG. 5 is a schematic diagram of another example system for securely and precisely determining the physical location of a user;
FIG. 6 shows three flow diagrams which illustrate another example method of operation of the system shown in FIG. 1;
FIG. 7 illustrates an exemplary computing-based device in which embodiments of the methods described herein may be implemented.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

As described above, there may be situations where a service provider enables a user to request a service via a web-based application ('web app') and where that service is provided to the user before payment. In such circumstances, the service provider may wish to have some assurance that the user will ultimately pay for the service they receive. In an example application, a restaurant may offer an at-table ordering system using a web app and may wish to restrict ordering for a particular table in the restaurant to users seated at that table (e.g. to prevent those at other tables or those not in the restaurant from ordering food for the particular table). In another example application, a retail outlet may wish to restrict the download of vouchers for the store to users who are actually in a particular store.

Existing solutions may involve a person checking who is actually in a restaurant / store, etc. This is an expensive and labor intensive solution. Another existing solution is to distribute vouchers or codes (e.g. WiFi™ access codes) within an establishment to users; however, this may also be labor intensive and is potentially not a very accurate solution to the problem because vouchers / codes can be passed / forwarded from one user to another.

Methods and systems are described herein which securely and precisely determine the physical location of a user and this location may, for example, be used to determine whether to provide a service or not in the example scenarios described above. It will also be appreciated that the determined location may be used for any other purpose. In various examples the determined location may be used to control whether a transaction can be completed in a web app (or full application), where a transaction is an action with a noticeable effect outside the web app (or application) itself (e.g. ordering goods, changing the local environment, such as the lighting of volume of music being played) rather than simply making a change within the app itself (e.g. affecting the UI of the web app).

There are a number of existing techniques for determining the location of a user using their smart phone; however these typically rely on the phone reporting their location (e.g. where the GPS on the smart phone is used), may only provide coarse location information (e.g. where location is determined based on the cellular base station or wireless AP connected to which the smart phone is connected) and/or may be open to spoofing (e.g. a user reporting an incorrect location).

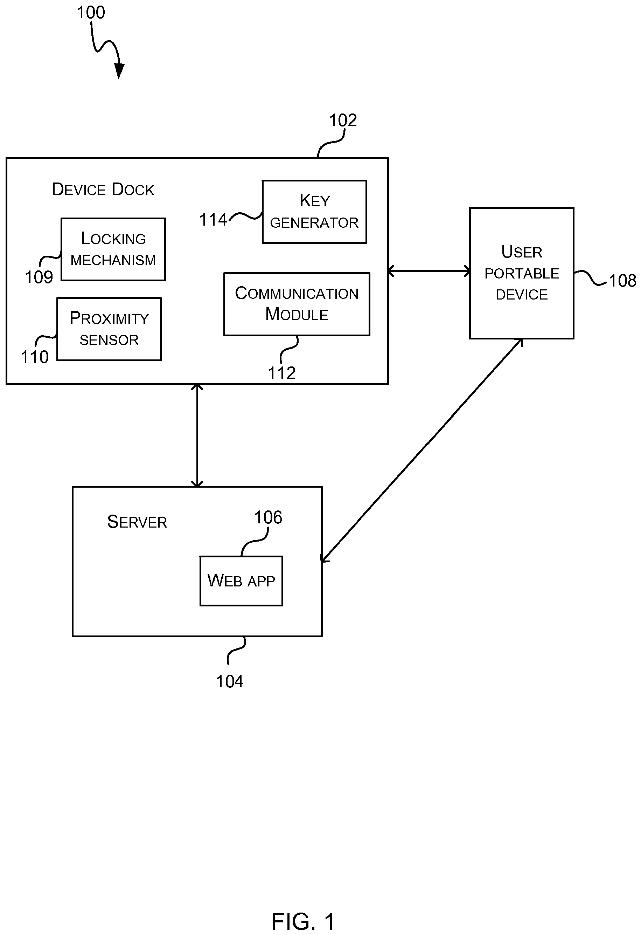

FIG. 1 is a schematic diagram of a system 100 for securely and precisely determining the physical location of a user. The system comprises a situated device dock 102 which communicates with a server 104, which may be a web server. In various examples, the situated device dock 102 communicates with a web app 106 running on the server 104 and the situated device dock 102 may be described as being associated with the web app (as described in more detail below). In some examples, the system 100 may include the server 104. The term 'web app' is used herein to refer to an application which runs within a browser installed on a computing device (such as user portable device 108). While many web apps use client-side scripting (e.g. JavaScript), other web apps may be achieved using server-side scripting, or simply with static web pages. Furthermore, everything that can be achieved using a web app can also be achieved using a full application (app) as well. Some apps are implemented using the browser engine, in the fashion of a web app wrapped inside an app. Other apps are written using UIs that are not web technology-based. As described in more detail below, the methods and systems described herein are not limited to a particular type of application technology (web app or app).

The device dock 102 is referred to as a situated device dock because the dock is located in a particular physical (and in many cases geographical) location for the period of use which is known to the server 104 and/or the web app 106 running on the server. This location may be a static location (e.g. on a particular table in a restaurant, in a particular location in a retail store, etc) or in a vehicle (e.g. in a car, train or airplane) which may move. Where the device dock is located in a vehicle, the physical location stays the same for the period of use (i.e. the device dock remains in the vehicle), but the geographical location of the vehicle may change (e.g. as it drives/flies around). It will be appreciated that the device dock 102 may be temporarily placed (e.g. positioned on a stand at a trade show). In such examples, the device dock remains in a known physical location for the period of use, but may be moved between locations in between periods of use.

As is described in more detail below, as the server 104 and/or web app 106 knows the precise location of the situated device dock 102, if the situated device dock 102 identifies a user portable device 108 as being proximate to the dock 102 (e.g. in contact with the dock 102 or within a few centimeters or meters of the dock 102) then the precise location of the user portable device 108 is also known. Security mechanisms may be implemented to ensure that if the device 108 is subsequently removed, such that it is no longer proximate to the dock, this is also determined and to mitigate against spoofing of device identity. The precision with which the server 104 and/or web app 106 knows the location of the situated device dock 102 may be application dependent and may be set by the operator of the server and/or web app. The precision with which the server 104 and/or web app 106 knows the location of the user portable device 108 is dependent upon the technology used to detect proximity to the dock 102 (as described in more detail below) and the precision is relative to the position of the situated device dock, i.e. the location of the user portable device may be known to be within a few centimeters of the situated device dock.

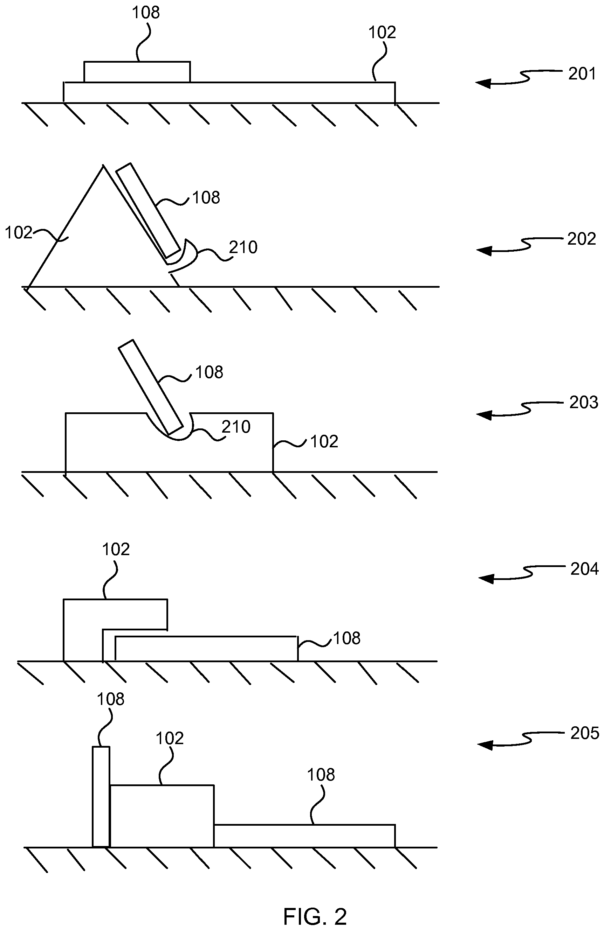

The situated device dock 102, which may also be referred to as a situated device base, is a physical device which may be shaped to receive one or more user portable devices 108, as shown in FIG. 2. FIG. 2 shows five schematic diagrams 201-205 of different situated device docks 102. The first example 201 shows a substantially flat dock 102 onto which one or more user portable devices 108 may be placed. The second example 202 shows a dock 102 which has a shelf or ridge onto which the user portable device 108 can be placed. The third example 203 shows a dock 102 comprising a slot into which the user portable device 108 can be placed and the fourth example 204 shows a dock 102 which is shaped so that the user portable device 108 is placed underneath the dock 102. The fifth example 205 shows two different orientations in which a user portable device 108 may be placed against a dock 102. Although all the examples in FIG. 2 show the user portable device 108 in direct contact with the dock 102, in other examples, the device 108 may be placed close to, but not in contact with, the dock 102 (e.g. there may be gap of a few centimeters between the dock 102 and the device 108).

For the purposes of the following description, any reference to a device being placed in or on a dock is by way of example only and the device may be placed on, in, under, beside, against or near the dock as shown in FIG. 2 and described above.

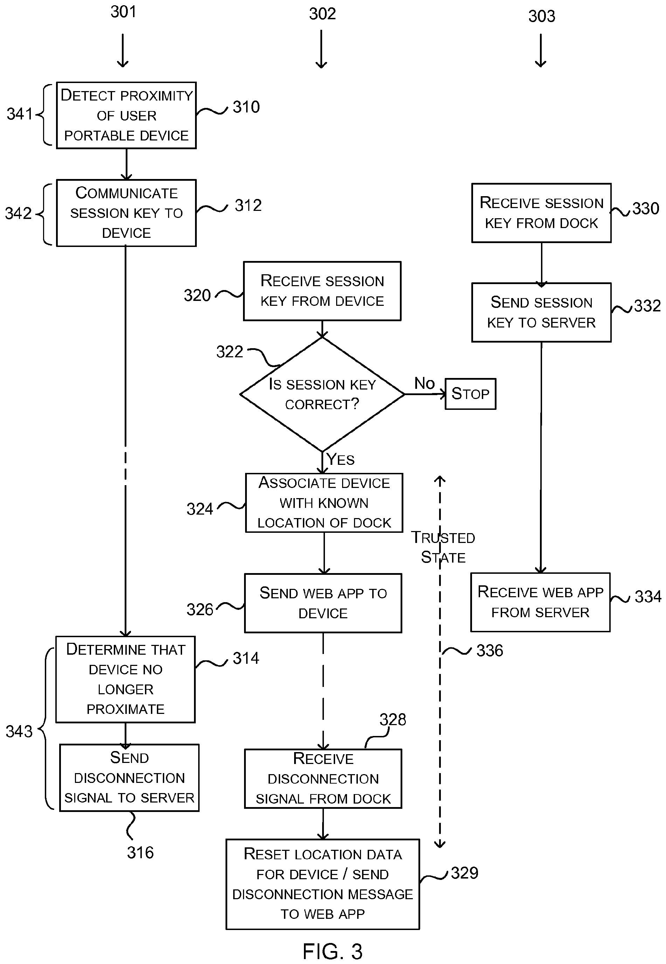

Although it is not shown in FIG. 2, the situated device dock 102 may, in various examples, comprise a locking (or restraining) mechanism 109 to hold the user portable device 108 (e.g. the locking mechanism 109 may be integrated into the outer housing or shell 210 of the situated device dock 102). In examples where the situated device dock 102 comprises a locking mechanism 109, the locking mechanism 109 is arranged to physically restrain the user portable device 108 (whilst still leaving any touch screen or other buttons accessible to the user) such that the user portable device 108 remains in proximity to the device dock 102 and in various examples release of the locking mechanism may result in disconnection of the user portable device 108 from the device dock 102 (e.g. as described below in more detail with reference to FIG. 3). The locking mechanism 109 may be actuated by the user or it may be actuated by the device dock itself (e.g. by the web server software running on the device 108 or on the server 104). In various examples, the dock / software may prevent undocking at some times (e.g. during a sensitive transaction such as when an order has been placed but not paid for, therefore forcing the user to cancel the order or complete payment for their device to be released).

In some examples the outer housing or shell 210 of the situated device dock 102 may be shaped such that it can only receive a single user portable device 108. For example, a shelf or ridge (e.g. in example 202) or slot (e.g. in example 203) on the dock which receives the user portable device may only be large enough to receive a single user portable device and/or may not be sufficiently large to receive two user portable devices. This enables a one to one relationship between a user portable device and dock at any time, although at different times, different devices may be placed in the dock.

In various examples, the situated device dock 102 may be configured such that the user portable device 108 is clearly visible and the device's user input devices (e.g. touch screen and/or physical buttons) are accessible when placed in the dock (e.g. as in examples 201-203 and 205, but not necessarily in example 204). This provides a security feature as a user is less likely to leave their device accidentally in the dock (and so this reduces the chance that the user and their user portable device are not co-located).

In various examples, the act of removing and re-inserting the user portable device 108 into the situated device dock 102 may be part of the application user interface control and so the situated device dock 102 may be further configured to make removal and re-insertion easy.

The user portable device 108 may be any type of portable user computing-device including, but not limited to, smart phones, tablet computers, laptop computers, PDAs, and other handheld computing devices. It will be appreciated that the methods described herein securely determine a precise location of the user portable device 108, rather than the location of the user (i.e. the person) carrying the device 108. However, the user is assumed to be in the same place as (i.e. co-located with) their user portable device 108 and so any reference herein to the location of a user is considered equivalent to the location of the user's user portable device.

As shown in FIG. 1, the situated device dock 102 comprises a proximity sensor 110 and a communication module 112. The proximity sensor 110 is arranged to detect a user portable device 108 in proximity to the situated device dock 102, i.e. to detect the device "docking". Any suitable technology may be used and examples include, but are not limited to, near-field communication (NFC) technologies, an infra-red (IR) reflector, a pressure switch, a camera, a color sensor (e.g. which detects the color of a user portable device), electromagnetic sensing, wireless charging (e.g. by monitoring the current draw), etc. In various examples, the proximity sensor 110 may detect the body of the user portable device 108 and suitable technologies include using a distance sensor based on reflected IR signals, detecting the weight of the user portable device in/on the dock, sensing of blocking of ambient light by the user portable device, sensing of the user portable device's electromagnetic radiation or its effect on an electric or electromagnetic field generated by the dock (e.g. operating on similar principles to capacitive touch sensing), use of sound sensing (e.g. if the dock has a tight friction fit then audio may be used to sense when the device is removed) and use of a physical switch that is depressed by the user portable device when it is in the dock. Where the device dock 102 comprises a locking mechanism 109, the proximity sensor 110 may be integrated with the locking mechanism 109 and may detect whether the locking mechanism is open (no device in proximity) or closed (device in proximity).

In various examples, the dock 102 may also provide a data connection between the user portable device 108 and the server 104 and/or provide electrical power to charge the user portable device 108 (e.g. via a wireless charging pad which may also be used as the proximity sensor 110). Where the dock provides electrical power to the user portable device, this ensures that the battery within the device does not become flat (i.e. become drained of power) during the interaction with the web app and may, for example, enable the screen of the user portable device to remain on for the entire time that the device is in the dock.

The communication module 112 is arranged to communicate with a proximate user portable device 108 and as a result many different short-range communication technologies may be used. Examples include, but are not limited to, NFC, short-range wireless (e.g. Bluetooth Low Energy, BLE), audio, sonic, vibration, etc. In further examples, the communication module 112 may be a display device (e.g. an LCD display) which is arranged to display a QR code, visual barcode or alphanumeric code, which may be captured by a camera on the user portable device 108 or viewed by the user and entered into the user portable device via a user input device (e.g. keyboard, speech to text application, etc.). As is described in more detail below, where a display is used, the display changes (i.e. the same QR code is not displayed all the time) and in some examples, the display may only display a code in response to detecting a user portable device in proximity to the dock.

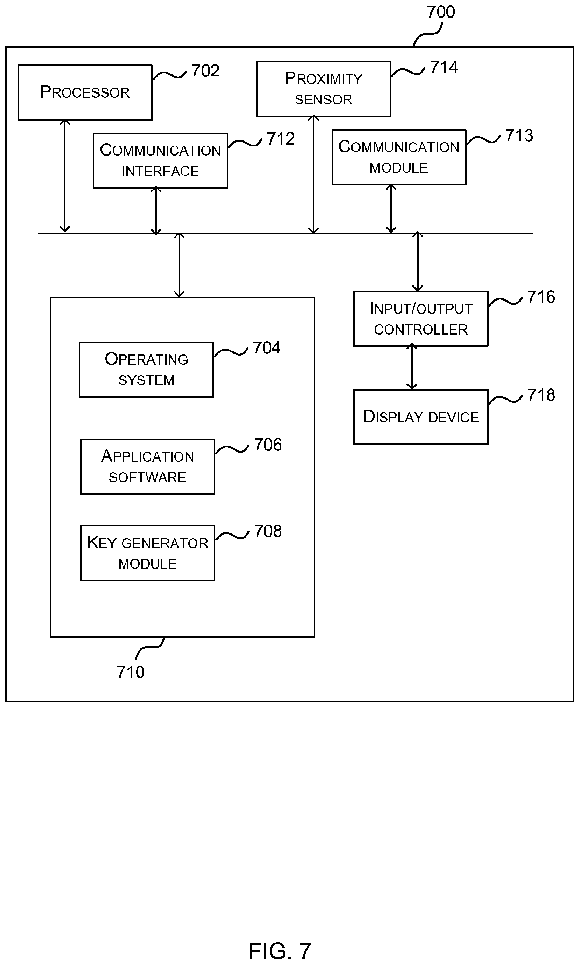

In various examples (and as shown in FIG. 7), the situated device dock 102 may comprise a second communication module arranged to communicated with the server 104. This may use a different technology to the first communication module (e.g. it may use WiFi™) or they may use the same technology (e.g. they may use conventional WiFi™ to communicate with the server 104 and WiFi Direct at very short range to communicate with the proximate user portable device 108).

Although the two functional elements 110, 112 are shown separately, in some examples, a single element within the situated device dock 102 may operate as both the proximity sensor 110 and the communication module 112. For example, NFC may be used for both proximity sensing and communicating with the user portable device 108 and so a situated device dock 102 may comprise an NFC module which acts as both the proximity sensor 110 and the communication module 112. In various examples, the situated device dock may comprise an RFID tag with a built-in key generator (e.g. an RSA key generator) which operates as both the proximity sensor 110 and the communication module 112.

The communication module 112 may be arranged to communicate a session key to the user portable device 108, as is described in more detail below with reference to FIG. 3, and in various examples the session key may be actively pushed to the user portable device 108 by the communication module 112. The session key is used to enable authentication between the user portable device 108 (which receives the key) and an application, as described in more detail below (e.g. with reference to FIG. 3). In various examples, the authentication may be performed by the server 104 on behalf of the application.

The session key may be generated within the situated device dock 102, e.g. in a key generator module 114. Alternatively, the session key may be generated elsewhere (e.g. by the server 104) or in some examples, as described below, a unique property of the user portable device 108 may be detected by the situated device dock 102 and used instead of a session key. Any suitable technology may be used to generate the session key (which may also be referred to as a 'connection key') which is a key that unlocks the ability to connect to the server 104 for a trusted transaction session. The session key may be a dynamically generated key (e.g. a random number generated anew every time) so it cannot be guessed or remembered, a time-limited key (e.g. an RSA key) which changes frequently or a session-limited key (e.g. which changes on a per-connection basis instead of over time). In an example, the key generator module 114 may be an RSA SecurlD® integrated circuit. Where the dock provides a data connection between the user portable device and the server, this may use a different communication technology and/or a different communication channel to that used by the communication module 112.

In some examples, a single session key may only be provided to a single user portable device 108 (i.e. such that there is a strict one-to-one relationship between session keys and user portable devices). This one-to-one relationship may be achieved by the use of a communication method which can only transfer the key to a single device, e.g. by using a sufficiently short range wireless technology that only a single device can be in range at any time (and this may be linked to the actual shape of the dock, as described above). Having transmitted the session key to one device in such examples, the same key is not re-transmitted and a different key is used each time. In another example, where the session key is displayed by the situated device dock for capture by a camera in the user portable device, the display may be arranged such that it can only be viewed by a single camera (e.g. the display may be shielded or otherwise be arranged to have a very narrow viewing angle) and the session key may only be displayed for a limited period of time. Similarly, where the session key is displayed and read by a user who inputs the key manually into the user portable device, the viewing angle of the display may be restricted by shielding or other means and the key may only be displayed for a limited period of time. In such examples the session key is specific to a particular dock, a particular user portable device and a particular web app at a particular time.

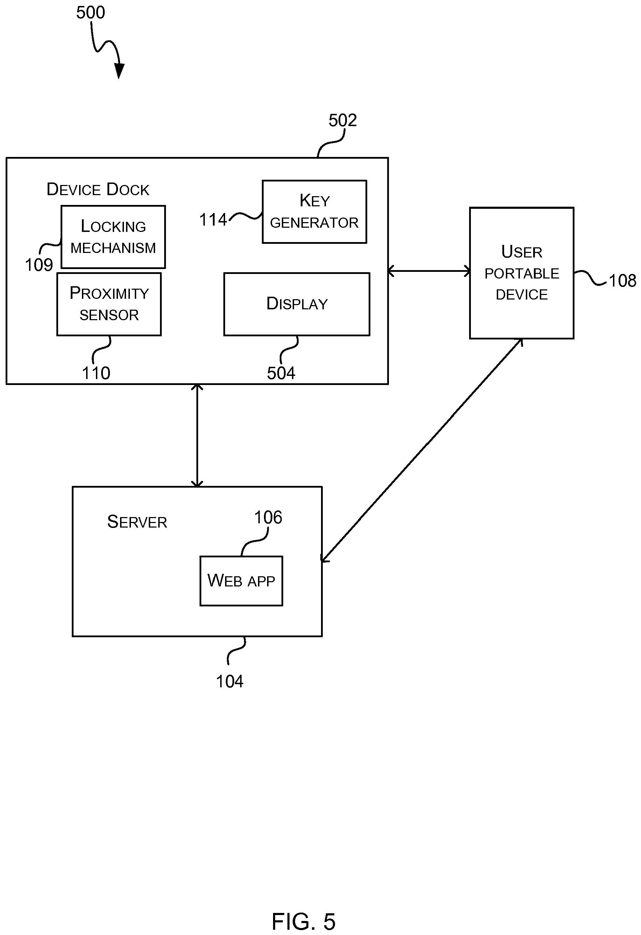

Although FIG. 1 (and similarly FIG. 5 described below) shows the dock 102 and the server 104 as separate elements, in some examples the server may be integrated within the dock. In such examples, the session key may be communicated to the user portable device from the dock via a communication channel which is separate from the connection between the user portable device and the server. In an example, the user portable device may communicate with the server via WiFi™ and the session key may be communicated to the user portable device from the dock using NFC or BLE.

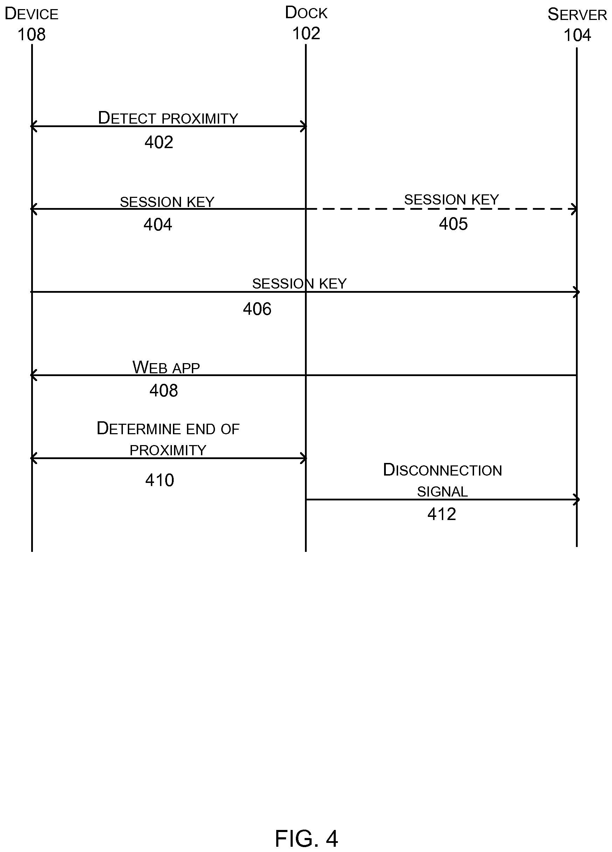

FIG. 3 shows three flow diagrams 301-303 which illustrate a method of operation of the system 100 shown in FIG. 1. The first flow diagram 301 shows an example method of operation of a situated device dock 102, the second flow diagram 302 shows an example method of operation of a server 104 and the third flow diagram 303 shows an example method of operation of a user portable device 108. These flow diagrams may be described with reference to the message flow shown in FIG. 4.

As shown in the first flow diagram 301, in response to detecting a user portable device in proximity to the dock (block 310 in FIG. 3 and arrow 402 in FIG. 4), the situated device dock communicates a session key to the device (block 312 and arrow 404). As shown in the third flow diagram 303, the user portable device receives the session key from the dock (block 330 and arrow 404). In many examples, the dock may transmit a URL to the user portable device (in block 312) where the URL includes the session key. The dock may also transmit additional information (e.g. as part of a URL or separately) such as the DNS domain name of the server 104 and the location of the page of interest within that server (which may identify the particular dock 102) or other information identifying the particular dock. In response to receiving the session key (in block 330, e.g. in the form of a URL containing the session key), the user portable device sends the session key to the server (block 332 and arrow 406) where the server may be identified in the URL or other information received from the dock along with the session key (as described above) or may otherwise be known to the user portable device (e.g. the URL may comprise a shortcut to a custom app on the user portable device, rather than a web app, and the custom app may already have the server location stored within it).

On receipt of the session key from the user portable device (block 320 and arrow 406), the server checks whether the received key is correct (block 322). This check (in block 322) may, for example, involve checking the received key against a known key for the particular dock (where as described above, the identity of the particular dock may be part of the URL or server address used by the user portable address to access the server). For example, the received key may be checked against a key which corresponds to the particular dock and the current time (or the current time minus a small time interval). In some examples, the dock may transmit both the session key and a time stamp for the time when the session key was generated / transmitted. This time stamp may be forwarded from the user portable device to the server along with the key. In such examples, the key received by the server may be checked (in block 322) against a known key for the particular dock at the time identified by the time stamp and additionally the time stamp may be checked to see that it is sufficiently recent. Where the time stamp is outside a time window which is specified (e.g. where it is more than 2 minutes different from the current time), the method does not proceed any further. In another example, where the session key is generated by the dock and is otherwise not known to the server, the dock may communicate the session key to both the device and the server (e.g. in block 312 and dotted arrow 405) and the check (in block 322) may comprise comparing the key received from the user portable device and the key received from the dock.

If the session key is determined (in block 322) to not be correct, the method does not progress further. However, if the session key provided by the user portable device (and received in block 320) is correct ('Yes' in block 322), the server associates the user portable device with the known location of the situated device dock (block 324) and sends a web app to the device (block 326 and arrow 408). The user portable device receives the web app from the server (block 334 and arrow 408) and the user of the user portable device can then use the web app to interact with the server in a trusted manner, because the server knows an accurate, current location of the user portable device. In various examples, any transactions executed by the web app on the user portable device are associated with the location of the situated device dock. In various examples, transactions (or other functionality of the web app) may only be permitted or enabled when the user portable device is associated with the location of the dock associated with the web app. A situated device dock may be associated with a single web app (i.e. such the dock always triggers the downloading of the same web app in block 326), however there may be many situated device docks (at different locations) associated with the same web app (e.g. one situated device dock on each table in a restaurant) such that more than one dock triggers the downloading of the same web app. In other examples, a single device dock may be associated with multiple web apps (i.e. such that the dock triggers downloading of one of the associated web apps in block 326).

In various examples where a single device dock is associated with multiple apps, the apps may be full apps and the app may react to other elements of context or user preference to decide which of the multiple apps to open. Where the multiple apps are all web apps, which web app is downloaded (in block 326) may be dependent upon the network that the user portable device is connected to. For example, if the user portable device is connected to a secure corporate network, an employee-friendly version of a web app may be downloaded (e.g. a version of an app which is for use by staff in a restaurant rather than diners); however if the user portable device is connected to a public or guest network, a public-friendly version of the web app may be downloaded (in block 326) instead. In other examples, the user may be prompted to select which app should be downloaded or a selected app (from the multiple associated web apps) may be downloaded based on the positioning of the user portable device relative to the situated device dock (e.g. which one of multiple possible 'slots' the user portable device is placed in).

Referring back to one of the applications described above, if the situated dock is located on a particular table in a restaurant, once the user portable device has received the web app (in block 334), the user may use the web app to order food for delivery to the particular table (which is an example of a transaction). Users at other tables or users who are not in the restaurant are prevented (by the web app / server) from ordering food to that table as they do not have an associated trusted location which corresponds to the table (and so these particular transactions are not enabled or not allowed to complete).

In order that the user portable device does not continue to have this trusted location perpetually, when the situated device dock determines that the user portable device is no longer proximate (block 314 and arrow 410), it sends a disconnection signal to the server (block 316 and arrow 412). On receipt of the disconnection signal at the server (block 328 and arrow 412), the server resets the location data for the user portable device (block 329). The user portable device no longer has a trusted location which corresponds to the location of the situated device dock. In various examples, in addition to or instead of resetting the location data (in block 329), the server may cause the web app to automatically close or may restrict the functionality of the web app. In such examples, the web server informs the web app (in block 329) that the user portable device has disconnected from the dock (e.g. using web sockets) and this affects the functionality / operation of the web app and may cause it to close automatically.

It can be seen from the above description that there are three phases 341-343 of the operation of the situated device dock. The first phase 341 (which corresponds to block 310) is the arrival phase of a user portable device at the dock. The second phase 342 (which corresponds to block 312) is the data sharing phase, in which the session key is shared with the user portable device, and the third phase 343 (which corresponds to blocks 314-316) is the departure phase of the user portable device. In between the data sharing phase 342 and the departure phase 243 the user may transact via the web app. The user may also be able to transact for a period of time following the departure phase, as described in more detail below.

The detection of the end of proximity between the situated device dock and the user portable device (in block 314) may use the proximity sensor 110 or may, alternatively, use a different technique to that used to detect the initial proximity of the user portable device (in block 310). As described above, where the device dock 102 comprises a locking mechanism, the end of proximity may correspond to when the locking mechanism is released (by the user or by the dock). In an example, a time-out may be used (e.g. the user has a pre-defined time period to complete their transaction after verifying their location in block 324). Where a time-out is used, the length of the pre-defined time period is dependent upon the app and the application space in which the method is being used. For example, if the app is part of a marketing promotion in a shopping mall where they get discount vouchers if they visit certain location(s), the pre-defined period may be a few hours. If, however, the app is used to enable a user to order food in a restarant, the time period may only be a few minutes. In various examples, there may be different proximity rules (e.g. in terms of separation distance between the dock and the user portable device) in relation to determining initial proximity (in block 310) and determining lack of proximity (in block 314) and this may be a result of (or result in) use of different technologies to make each determination. In an example, NFC may be used to determine when a device is proximate to the situated device dock (in block 310) which means that the user portable device must be within a few centimeters of the dock. A longer range technology, such as BLE, may then be used to determine when the user portable device is no longer proximate to the dock (in block 314). This may allow a user to remove their device from the dock in order to perform a transaction, once the initial transfer of the session key (in blocks 312 and 330) has been achieved.

It can also be seen from the description of FIG. 3 above that the user portable device has two distinct states with respect to the server: an untrusted state and a trusted state. As shown by the dotted arrow 336 in FIG. 3, the trusted state starts when the server associates the user portable device with the known location of the situated device dock (in block 324) and ends when the server resets the location data for the user portable device and/or sends a disconnection message to the web app (in block 329) as a result of receiving a disconnection signal from the situated device dock (in block 328). In various examples, a user using the user portable device may still be able to interact with the web app (as delivered in block 334) even once it is not in the trusted state; however, there may be some actions / operations which are only enabled when the user portable device is in the trusted state. In other examples, the web app may automatically close once the trust state ends (e.g. following block 329). In yet further examples, the user may be able to interact as if in the trusted state for a short period following disconnection.

Although FIG. 3 shows the end of the trusted state as a consequence of receiving the disconnection signal at the server (in block 328), in other examples the trusted state may persist longer than this, e.g. for a limited period of time. In some examples, on receipt of the disconnection signal at the server, the server may cause a message to be displayed on the user portable device prompting the user to replace the device onto the dock. If this is not performed (i.e. if the dock does not detect the proximity of the user portable device) within a defined time period, the trusted state may end. For example, re-authentication (by replacing the user portable device in the dock) may be demanded (e.g. via a prompt message in the UI on the user portable device or the dock) at intervals (e.g. after a pre-defined time period) or key moments within the user interaction with the web app (e.g. when moving between pages, when completing a transaction, etc.). Where a device is detected proximate to the dock within the defined time period, cookies and/or a new session key provided by the dock to the device may be used to determine (by the web server) whether the device which is now proximate to the dock is the same one as before or a new device.

A first example interaction is shown below in which the trusted state ends as soon as the user portable device is removed from the dock.
a)A user places their smart phone in a situated device dock and in response of the dock detecting the proximity of the phone, the dock transmits a URL to the smart phone. The URL includes the address of a web server and a session key which is known to the web server.
b) The smart phone uses a web client to open the URL and once the web server has checked the validity of the session key, the web server sends a web app to the smart phone.
c)A user can now interact with the web app in a trusted mode, because the web server knows the location of the user portable device.
d) At some point, the user removes the smart phone from the dock. This is detected by the dock and communicated to the web server.
e)The web server informs the web app that the smart phone is no longer in the dock (e.g. using web sockets) and as a result the web app changes behavior.

There are many different ways that the web app may change behavior as a result of being informed that the smart phone has been removed from the dock (e.g. such that the trusted state has ended). In various examples, the web app may close automatically thereby preventing any further activity by the user. In other examples the web app may restrict functionality within the app (e.g. such that the user can view a restaurant's menu but not place an order) and where functionality is restricted this may be indicated in the GUI of the app (e.g. by indicating that the activity permitted is restricted to "undocked" or "untrusted" actions and/or by indicating that certain actions will require redocking to complete).

In the example interaction above, a grace period may be implemented such that where the phone is removed from the dock for less than a threshold period of time (e.g. 5 minutes), the web app returns to full functionality on re-docking without requiring transmission of a new session key from the dock to the user portable device and from the user portable device to the web server.

A second example interaction is shown below in which user portable device is removed and then replaced in the dock.
a)A user places their smart phone in a situated device dock and in response to the dock detecting the proximity of the phone, the dock transmits a URL to the smart phone. The URL includes the address of a web server and a session key which is known to the web server.
b) The smart phone uses a web client to open the URL and once the web server has checked the validity of the session key, the web server sends a web app to the smart phone.
c)A user can now interact with the web app in a trusted mode, because the web server knows the location of the user portable device.
d) At some point, the user removes the smart phone from the dock. This is detected by the dock and communicated to the web server.
e)The web server continues to serve additional pages and data to the web app (despite the smart phone being removed from the dock), as long as the app is not executing a restricted function (e.g. executing a transaction).
f)When the web app performs a restricted function, such as executing a transaction, it stores a cookie on the smart phone to identify it, informs the web server of the desired transaction, including the cookie details and presents a message to the user asking them to replace the smart phone in the dock.
g) When the phone is replaced in the dock, the dock transmits a new URL to the smart phone. The URL includes the address of a web server which is the same as in step (a) above and a new session key which is known to the web server.
h) The smart phone uses a web client to open the URL and once the web server has checked the validity of the session key, the web server sends a web app to the smart phone.
i) The web app retrieves the cookie (stored in step (f)) and determines that the smart phone has a pending restricted function (e.g. a pending transaction).
j) The web server executes the restricted function (e.g. the pending transaction), associating the function with the dock's physical location.

In various examples, where the dock communicates an address of the web server to the user portable device upon docking, the web server may cause the address to expire or appear to expire (e.g. by ensuring that the web server does not respond to any further use of that address) as soon as the disconnection of the user portable device is detected. In other examples, however, the web page may expire when the session key changes.

In the description of FIG. 4 above, messages flow between the dock 102 and the user portable device 108 and between the dock 102 and the server 104 and also between the user portable device 108 and the server 104. In various examples, the situated device dock 102 may provide a data connection (e.g. in the form of a wireless AP) for the user portable device 108. In such examples, messages flowing between the device 108 and the server 104 pass via the dock 102.

In an example of the methods described above, the situated device dock 102 may be configured to detect a user portable device which is in physical contact with the dock (e.g. in block 310 of FIG. 3). The dock may further be arranged to communicate the session key to only a single user portable device, i.e. to only the device which in in physical contact with the dock (e.g. in block 312). This strict 1:1 ratio between the dock and the user portable device and between the session key and the user portable device increases security because the physical arrangement of the dock prevents a second user portable device from eavesdropping on the session key. Furthermore, where the physical arrangement of the dock makes it visually clear to users that it can only accommodate a single user portable device at any time, any confusion of users about the purpose of the dock or how it should be used is minimized.

In other examples, however, the situated device dock may receive more than one user portable device and may transmit the same session code to each device (however, depending on the proximity sensing technology used this may mean that the server cannot distinguish which of the user portable devices has disconnected) or different session codes to each user portable device. Where the situated device dock is arranged to receive more than one user portable device it may be referred to as a 'multi-device dock'. Where a multi-device dock is used, then the relative physical locations of the user portable devices on the dock may be used to provide a coherent user experience across all of them. In an example, an image or movie could be played across all the devices in the dock (e.g. 6 devices arranged in a 3x2 grid), with each device automatically showing the correct portion of the image / movie (based on its relative location within the dock). In various examples where the dock has input/output (I/O) capabilities (e.g. buttons relating to each receptacle for a user portable device in the dock), the correct button can be mapped to the correct device. These examples may also take into account the screen size of the user portable device, as sensed by the dock itself or by the web app, so that the icons / UI / etc. are correctly positioned and/or proportioned relative to the dock allowing for different device sizes.

FIG. 5 is a schematic diagram of another example system 500 for securely and precisely determining the physical location of a user. As in FIG. 1, the system comprises a situated device dock 502 which communicates with a server 104, which may be a web server. The situated device dock 502 communicates with a web app 106 running on the server 104 and the situated device dock 502 may be described as being associated with the web app. In some examples, the system 500 may include the server 104. In this example, as in FIG. 1, the dock 502 comprises a key generator module 114; however in this example the communication module (element 112 in FIG. 1) comprises a display device 504. The display device 504 may be arranged to display the URL which includes the session key (e.g. in the form of a QR code) or in other examples, the address of the web server may be printed (or otherwise written) on the dock 502 and the display device 504 may only display the session key (e.g. in the form of a QR code or an alphanumeric / numeric code). Where an alphanumeric / numeric code is displayed, this may be read by the user and entered in manually to the user portable device or the code may be captured using a camera on the user portable device.

In some examples, the dock 502 in FIG. 5 may comprise a separate proximity sensor 110 or in other examples, the display device 504 may also act as a proximity sensor. For example, where the display device 504 displays the URL or session key in such a manner that it can only be read / captured by a user or user portable device in close proximity to the dock (e.g. through physical screening of the display, use of optical filtering effects, etc.), the display device 504 acts as a proximity sensor as only those devices which are sufficiently proximate are able to receive the session key.

In the example of FIG. 5 some user input is required (e.g. to hold the phone and capture the code or to manually input the code). This is in contrast to many of the examples described above with reference to FIG. 1 where the interaction between the dock and the user portable device is automatic and does not require any user input and may also be invisible to the user. In various examples, the user only sees that in response to placing their user portable device on the dock, the web app launches.

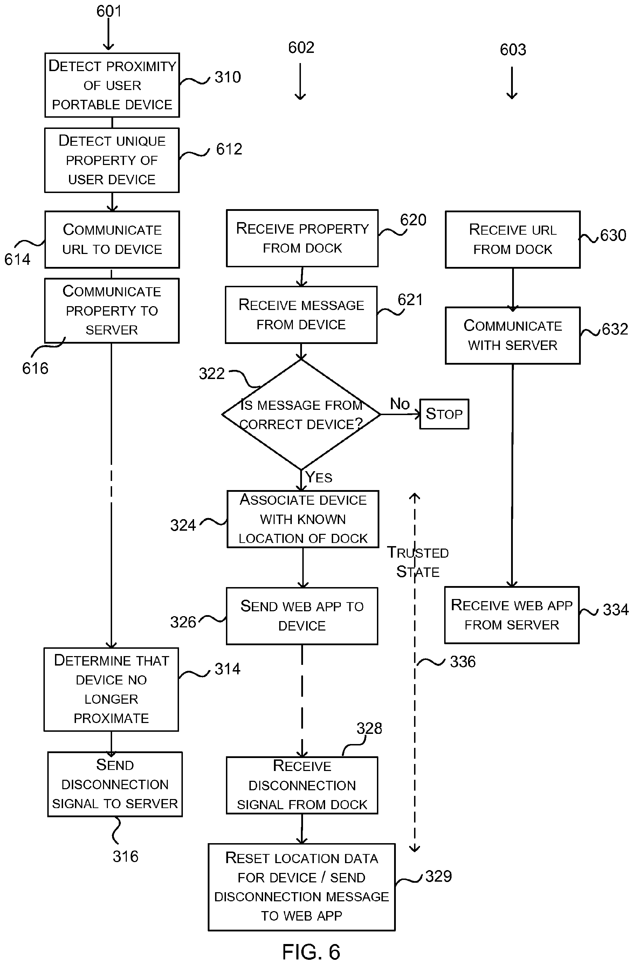

In the methods described above, a session key is transmitted from the situated device dock 102 to the user portable device 108 (e.g. in block 312 of FIG. 3). In variations on these methods, however, a unique property of the user portable device 108 may be used instead of the session key as shown in FIG. 6.

FIG. 6 shows three flow diagrams 601-603 which illustrate a method of operation of the system 100 shown in FIG. 1. The first flow diagram 601 shows an example method of operation of a situated device dock 102, the second flow diagram 602 shows an example method of operation of a server 104 and the third flow diagram 603 shows an example method of operation of a user portable device 108.

As shown in the first flow diagram 601, in response to detecting a user portable device in proximity to the dock (block 310 in FIG. 6), the situated device dock detects a unique property of the user portable device (block 612). Examples of a unique property which may be used (in block 612) include, but are not limited to, the MAC address of the device's Bluetooth™ or WiFi™ chipset, another device ID (e.g. its machine iD on a secure domain) and details of its associated user (e.g. their live ID or account ID). The situated device dock then communicates an address of the server 104 (e.g. in the form of a URL) to the user portable device (block 614) and the unique property to the server (block 616). As shown in the third flow diagram 603, the user portable device receives the address from the dock (block 630) and as shown in the second flow diagram 602, the server receives details of the unique property from the dock (block 620).

In response to receiving the address (in block 630), the user portable device communicates with the server (block 632) and in response to receiving a message from the user portable device (block 621), the server checks whether the message was received from the device identified by the dock (block 622). If the message is determined (in block 622) to not have been received from the correct user portable device (i.e. the device identified by the unique property detected in block 612), the method does not progress further. However, if the message received in block 321 is from the correct user portable device ('Yes' in block 622), the server associates the user portable device with the known location of the situated device dock (block 324) and sends a web app to the device (block 326). The user portable device receives the web app from the server (block 334) and the user of the user portable device can then use the web app to interact with the server in a trusted manner as described above.

As described above with reference to FIG. 3, when the situated device dock determines that the user portable device is no longer proximate (block 314), it sends a disconnection signal to the server (block 316). On receipt of the disconnection signal at the server (block 328), the server resets the location data for the user portable device and/or sends a disconnection message to the web app running on the user portable device (in block 329).

The methods described above refer to the use of a web app which is transmitted from the server 104 to the user portable device 108 and runs within a browser on the user portable device. As a result the web app does not require any installation step (which saves time and reduces complexity) and does not require any special software to be installed on the user portable device. Furthermore, the system is independent of the type of user portable device that is used (e.g. it is agnostic to the operating system, manufacturer, form factor, etc.). As described above, the web app is automatically downloaded to the user portable device once the session key has been verified by the server. In other examples, however, the methods may be applied where instead of a web app, an application which runs on the user portable device is used, i.e. the situated device dock 102 is associated with a "full" application which is installed and runs on the user portable device rather than a web app which runs within a browser on the user portable device.

Where a "full" application is used, the methods described above may be modified such that instead of sending the web app to the device (e.g. in block 326 of FIG. 3), the server checks whether the full application is installed on the user portable device and if not, the server directs the user (via the user portable device) to a suitable location to download and install the application (e.g. an application store). Where a full application is used, the application can use APIs on the user portable device are not be available to a web app and as a result may use additional features on the user portable device (e.g. a front-facing camera, access to a user portable device's data such as music, contacts, etc.).

In an example where a full application is used (instead of a web app), an NFC tag in the dock may be associated with the application and may transmit a message to the user portable device with one or more parameters appended on the end (comprising the session key). This message triggers the opening of the application on the user portable device and if the application is not already installed, the message may trigger opening of an application or website where the user can download the application for installation on the user portable device.

FIG. 7 illustrates various components of an exemplary computing-based device 700 which may be implemented as any form of a computing and/or electronic device, and which may operate as a situated device dock.

Computing-based device 700 comprises one or more processors 702 which may be microprocessors, controllers or any other suitable type of processors for processing computer executable instructions to control the operation of the device in order to generate a session key and/or communicate with proximate user portable devices. In some examples, for example where a system on a chip architecture is used, the processors 702 may include one or more fixed function blocks (also referred to as accelerators) which implement a part of the methods described above in hardware (rather than software or firmware), e.g. generation of the session keys. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs).

Platform software comprising an operating system 704 or any other suitable platform software may be provided at the computing-based device to enable application software 706-708 to be executed on the device. The application software may include a key generator module 708.

The computer executable instructions may be provided using any computer-readable media that is accessible by computing based device 700. Computer-readable media may include, for example, computer storage media such as memory 710 and communications media. Computer storage media, such as memory 710, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media (memory 710) is shown within the computing-based device 700 it will be appreciated that the storage may be distributed or located remotely and accessed via a network or other communication link (e.g. using communication interface 712).

The communication interface 712 enables the computing-based device 700 to communicate with a remote server as described above and may also be used to communicate with a proximate user portable device. A separate communication module 713 is provided which is used to communicate the session key with the user portable device, as described above. The communication interface 712 or the communication module 713 may additionally operate as a proximity sensor or a separate proximity sensor 714 may be provided.

The computing-based device 700 may further comprise an input/output controller 716 arranged to output display information to a display device 718 which may be separate from or integral to the computing-based device 700. The display information may provide a graphical user interface and in some examples (as described above), the display 718 (where provided) may enable communication of a session key to a proximate user portable device. In various examples, the input/output controller 716 may also be arranged to receive and process input from one or more devices, such as a user input device (e.g. a mouse, keyboard, camera, microphone or other sensor). In some examples the user input device may detect voice input, user gestures or other user actions and may provide a natural user interface (NUI).

Although the present examples are described and illustrated herein as being implemented in a system as shown in FIGs. 1 and 5 in relation to ordering goods / service for later payment (e.g. where being sure of the location of the user making the order lowers the risk of default on payment), e.g. in a restaurant, shoe shop (where the method may be applied to shoe fittings), however, the system described is provided as an example and not a limitation. As those skilled in the art will appreciate, the present examples are suitable for application in a variety of different types of systems. There are many other applications for the methods described above and examples include, but are not limited to multi-user environments and interfacing with a situated device, appliance or "intelligent environment" comprising smart appliances embedded in an environment (e.g. as furniture or other fixtures) where permission to do so is dependent upon physical proximity to that device / appliance (which correspond to the situated device dock in the examples above).

Examples of multi-user environments where the methods described herein may be used include, but are not limited to, a bill-sharing aid where people at a restaurant table use their smart phones (and a web app as described) to determine who should pay for which items on the bill, a system which enables multiple people to control the environment in a restaurant booth (e.g. temperature, lighting, music choice and/or volume, etc.) where only those who's smart phones are on the dock have their preferences taken into account.

Examples of interfacing with a situated device include, but are not limited to, a request for a change to the environment (e.g. music choice / volume) in a public space (e.g. gym, nightclub, etc.), to provide an enhanced user interface to an appliance (where the dock is integrated within the appliance).

The methods described herein provide secure, precise location information for a user portable device (and hence for the user of the device). As the location information is provided by a situated device dock which is not controlled by the user, it is not possible for a user to spoof their location by reporting an incorrect position as is the situation in many known systems. The use of the session key ensures that it is the same user portable device which is in the dock and which is interacting with the server via the web app (or full application). The location is defined relative to a physical device dock and does not require any special hardware in the user portable device or, in many examples where a web app is used, any special software running on the user portable device. Furthermore, in examples where a situated device dock comprises built in I/O hardware (e.g. buttons), the methods described herein create a secure association to the I/O hardware such that the dock's I/O hardware can become part of the correct user portable device's (web) app experience.

The term 'computer' or 'computing-based device' is used herein to refer to any device with processing capability such that it can execute instructions. Those skilled in the art will realize that such processing capabilities are incorporated into many different devices and therefore the terms 'computer' and 'computing-based device' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments.

## Claims

1. A system for securely determining a location of a user, the system comprising:
a situated device dock (102) associated with an application, the situated device dock comprising:
a proximity sensor (110) arranged to detect a user portable device in proximity to the situated device dock; and
a communication module (112) arranged to communicate a session key to the user portable device in proximity to the situated device dock, the session key enabling authentication between the user portable device and the application; and
a server (104) comprising an input arranged to receive the session key from the user portable device and the server being further arranged to check that the received session key is correct, and in response to determining that the session key is correct to associate the user portable device with a known location of the situated device dock and to enable functionality within the application for the user portable device based on the known location of the situated device dock.

2. The system according to claim 1, wherein the communication module is arranged to actively push the session key to the user portable device in proximity to the situated device dock.

3. The system according to any of the preceding claims, wherein the situated device dock further comprises a key generator module (114) arranged to generate session keys for communication to user portable devices by the communication module.

4. The system according to any of the preceding claims, wherein the proximity sensor or the communication module is further arranged to detect an end of a period of proximity between the user portable device and the situated device dock.

5. The system according to claim 4, wherein the situated device dock is further arranged to transmit a disconnection message to a server associated with the application in response to detecting the end of the period of proximity.

6. A method of securely determining a physical location of a user for use by an application, the method comprising:
detecting, by a proximity sensor in a situated device dock associated with the application, proximity of a user portable device to the situated device dock (310);
in response to detecting the user portable device in proximity using the proximity sensor in the situated device dock, communicating a session key from the situated device dock to the user portable device (312);
receiving, at a server associated with the application, the session key from the user portable device (320);
checking that the session key received from the user portable device is correct (322);
in response to determining that the session key received from the user portable device is correct, associating the user portable device with a known location of the situated device dock (324); and enabling functionality within the application for the user portable device based on the known location of the situated device dock.

7. The method according to claim 6, wherein the application is a web application and the method further comprises:
in response to determining that the session key is correct, sending the web application to the user portable device (326).

8. The method according to claim 6 or claim 7, further comprising:
detecting, at the situated device dock associated with the application, an end to the proximity of the user portable device to the situated device dock (314);
sending a disconnection signal from the situated device dock to the server (316); and
in response to receiving the disconnection signal at the server, sending a disconnection message to the application.

9. The method according to claim 8, wherein the user portable device has two distinct states with respect to the server, an untrusted state and a trusted state, and wherein the trusted state starts when the server associates the user portable device with the known location of the situated device dock and the method further comprising:
ending the trusted state of the user portable device when the server resets location data for the user portable device and/or sends a disconnection message to the application as a result of receiving a disconnection signal from the situated device dock.

10. The method according to claim 9, further comprising:
in response to the ending of the trusted state, automatically closing the application or restricting functionality within the application.

11. The method according to any of claims 6-10, wherein detecting, by a proximity sensor in a situated device dock associated with the application, proximity of a user portable device to the situated device dock comprises:
detecting, by a proximity sensor in a situated device dock associated with the application, a user portable device in direct contact with or close to the situated device dock.

## Patentansprüche

1. System zum sicheren Bestimmen eines Ortes eines Benutzers, wobei das System umfasst:
ein aufgestelltes Vorrichtungsdock (102), welches mit einer Anwendung verknüpft ist, wobei das aufgestellte Vorrichtungsdock umfasst:
einen Näherungssensor (110), welcher angeordnet ist, um eine tragbare Benutzervorrichtung in der Nähe des aufgestellten Vorrichtungsdocks zu erkennen; und
ein Kommunikationsmodul (112), welches angeordnet ist, um einen Sitzungsschlüssel an die tragbare Benutzervorrichtung in der Nähe des aufgestellten Vorrichtungsdocks zu übermitteln, wobei der Sitzungsschlüssel Authentifizierung zwischen der tragbaren Benutzervorrichtung und der Anwendung ermöglicht; und
einen Server (104), welcher einen Eingang umfasst, welcher angeordnet ist, um den Sitzungsschlüssel von der tragbaren Benutzervorrichtung zu empfangen, und wobei der Server weiter angeordnet ist, um zu prüfen, ob der empfangene Sitzungsschlüssel korrekt ist, und als Reaktion auf das Bestimmen, dass der Sitzungsschlüssel korrekt ist, die tragbare Benutzervorrichtung mit einem bekannten Ort des aufgestellten Vorrichtungsdocks zu verknüpfen und Funktionalität innerhalb der Anwendung für die tragbare Benutzervorrichtung auf Basis des bekannten Ortes des aufgestellten Vorrichtungsdocks zu ermöglichen.

2. System nach Anspruch 1, wobei das Kommunikationsmodul angeordnet ist, um den Sitzungsschlüssel aktiv an die tragbare Benutzervorrichtung in der Nähe des aufgestellten Vorrichtungsdocks zu pushen.

3. System nach einem der vorstehenden Ansprüche, wobei das aufgestellte Vorrichtungsdock weiter ein Schlüsselerzeugungsmodul (114) umfasst, welches angeordnet ist, um Sitzungsschlüssel für die Übermittlung an tragbare Benutzervorrichtungen durch das Kommunikationsmodul zu erzeugen.

4. System nach einem der vorstehenden Ansprüche, wobei der Näherungssensor oder das Kommunikationsmodul weiter angeordnet ist, um ein Ende einer Periode der Nähe zwischen der tragbaren Benutzervorrichtung und dem aufgestellten Vorrichtungsdock zu erkennen.

5. System nach Anspruch 4, wobei das aufgestellte Vorrichtungsdock weiter angeordnet ist, um als Reaktion auf das Ende der Periode der Nähe eine Trennmeldung an einen mit der Anwendung verknüpften Server zu übertragen.

6. Verfahren zum sicheren Bestimmen eines physikalischen Ortes eines Benutzers zur Verwendung durch eine Anwendung, wobei das Verfahren umfasst:
Erkennen, durch einen Näherungssensor in einem aufgestellten Vorrichtungsdock, welches mit der Anwendung verknüpft ist, von Nähe einer tragbaren Benutzervorrichtung zu dem aufgestellten Vorrichtungsdock (310);
als Reaktion auf Erkennen der tragbaren Benutzervorrichtung in der Nähe, unter Verwendung des Näherungssensors in dem aufgestellten Vorrichtungsdock, Übermitteln eines Sitzungsschlüssels von dem aufgestellten Vorrichtungsdock an die tragbare Benutzervorrichtung (312);
Empfangen, an einem mit der Anwendung verknüpften Server, des Sitzungsschlüssels von der tragbaren Benutzervorrichtung (320);
Prüfen, ob der von der tragbaren Benutzervorrichtung empfangene Sitzungsschlüssel korrekt ist (322);
als Reaktion auf Bestimmen, dass der von der tragbaren Benutzervorrichtung empfangene Sitzungsschlüssel korrekt ist, Verknüpfen der tragbaren Benutzervorrichtung mit einem bekannten Ort des aufgestellten Vorrichtungsdocks (324), und
Ermöglichen von Funktionalität innerhalb der Anwendung für die tragbare Benutzervorrichtung auf Basis des bekannten Ortes des aufgestellten Vorrichtungsdocks.

7. Verfahren nach Anspruch 6, wobei die Anwendung eine Web-Anwendung ist und das Verfahren weiter umfasst:
als Reaktion auf Bestimmen, dass der Sitzungsschlüssel korrekt ist, Senden der Web-Anwendung an die tragbare Benutzervorrichtung (326).

8. Verfahren nach Anspruch 6 oder Anspruch 7, weiter umfassend:
Erkennen, an dem aufgestellten Vorrichtungsdock, welches mit der Anwendung verknüpft ist, eines Endes der Nähe der tragbaren Benutzervorrichtung zu dem aufgestellten Vorrichtungsdock (314);
Senden eines Trennsignals von dem aufgestellten Vorrichtungsdock an den Server (316); und
als Reaktion auf Empfangen des Trennsignals an dem Server, Senden einer Trennmeldung an die Anwendung.

9. Verfahren nach Anspruch 8, wobei die tragbare Benutzervorrichtung zwei eindeutige Zustände in Bezug auf den Server aufweist: einen nicht vertrauenswürdigen Zustand und einen vertrauenswürdigen Zustand, und wobei der vertrauenswürdige Zustand beginnt, wenn der Server die tragbare Benutzervorrichtung mit dem bekannten Ort des aufgestellten Vorrichtungsdocks verknüpft, und wobei das Verfahren weiter umfasst:
Beenden des vertrauenswürdigen Zustands der tragbaren Benutzervorrichtung, wenn der Server Ortsdaten für die tragbare Benutzervorrichtung zurücksetzt und/oder als Reaktion auf den Empfang eines Trennsignals von dem aufgestellten Vorrichtungsdock eine Trennmeldung an die Anwendung sendet.

10. Verfahren nach Anspruch 9, weiter umfassend:
als Reaktion auf das Beenden des vertrauenswürdigen Zustands, automatisches Schließen der Anwendung oder Beschränken von Funktionalität innerhalb der Anwendung.

11. Verfahren nach einem der Ansprüche 6-10, wobei Erkennen, durch einen Näherungssensor in einem aufgestellten Vorrichtungsdock, welches mit der Anwendung verknüpft ist, von Nähe einer tragbaren Benutzervorrichtung zu dem aufgestellten Vorrichtungsdock umfasst:
Erkennen, durch einen Näherungssensor in einem aufgestellten Vorrichtungsdock, welches mit der Anwendung verknüpft ist, einer tragbaren Benutzervorrichtung in direktem Kontakt zu dem aufgestellten Vorrichtungsdock.

## Revendications

1. Système pour déterminer de manière sûre un emplacement d'un utilisateur, le système comprenant :
une station d'accueil de dispositif localisée (102) associée à une application, la station d'accueil de dispositif localisée comprenant :
un capteur de proximité (110) agencé pour détecter un dispositif portable d'utilisateur à proximité de la station d'accueil de dispositif localisée ; et
un module de communication (112) agencé pour communiquer une clé de session au dispositif portable d'utilisateur à proximité de la station d'accueil de dispositif localisée, la clé de session activant une authentification entre le dispositif portable d'utilisateur et l'application ; et
un serveur (104) comprenant une entrée agencée pour recevoir la clé de session en provenance du dispositif portable d'utilisateur et le serveur étant en outre agencé pour vérifier que la clé de session reçue est correcte, et en réponse à la détermination du fait que la clé de session est correcte pour associer le dispositif portable d'utilisateur à un emplacement connu de la station d'accueil de dispositif localisée et pour activer une fonctionnalité au sein de l'application pour le dispositif portable d'utilisateur d'après l'emplacement connu de la station d'accueil de dispositif localisée.

2. Système selon la revendication 1, dans lequel le module de communication est agencé pour pousser activement la clé de session vers le dispositif portable d'utilisateur à proximité de la station d'accueil de dispositif localisée.

3. Système selon l'une quelconque des revendications précédentes, dans lequel la station d'accueil de dispositif localisée comprend en outre un module de génération de clé (114) agencé pour générer des clés de session pour une communication avec des dispositifs portables d'utilisateur par le module de communication.

4. Système selon l'une quelconque des revendications précédentes, dans lequel le capteur de proximité ou le module de communication est en outre agencé pour détecter une fin d'une période de proximité entre le dispositif portable d'utilisateur et la station d'accueil de dispositif localisée.

5. Système selon la revendication 4, dans lequel la station d'accueil de dispositif localisée est en outre agencée pour transmettre un message de déconnexion à un serveur associé à l'application en réponse à la détection de la fin de la période de proximité.

6. Procédé pour déterminer de manière sûre un emplacement physique d'un utilisateur pour son utilisation par une application, le procédé comprenant :
la détection, par un capteur de proximité dans une station d'accueil de dispositif localisée associée à l'application, d'une proximité d'un dispositif portable d'utilisateur avec la station d'accueil de dispositif localisée (310) ;
en réponse à la détection du dispositif portable d'utilisateur à proximité à l'aide du capteur de proximité dans la station d'accueil de dispositif localisée, la communication d'une clé de session de la station d'accueil de dispositif localisée au dispositif portable d'utilisateur (312) ;
la réception, au niveau d'un serveur associé à l'application, de la clé de session en provenance du dispositif portable d'utilisateur (320) ;
la vérification du fait que la clé de session reçue du dispositif portable d'utilisateur est correcte (322) ;
en réponse à la détermination du fait que la clé de session reçue du dispositif portable d'utilisateur est correcte, l'association du dispositif portable d'utilisateur à un emplacement connu de la station d'accueil de dispositif localisée (324) ; et
l'activation d'une fonctionnalité au sein de l'application pour le dispositif portable d'utilisateur d'après l'emplacement connu de la station d'accueil de dispositif localisée.

7. Procédé selon la revendication 6, dans lequel l'application est une application Web et le procédé comprend en outre :
en réponse à la détermination du fait que la clé de session est correcte, l'envoi de l'application Web au dispositif portable d'utilisateur (326).

8. Procédé selon la revendication 6 ou la revendication 7, comprenant en outre :
la détection, au niveau de la station d'accueil de dispositif localisée associée à l'application, d'une fin de la proximité du dispositif portable d'utilisateur avec la station d'accueil de dispositif localisée (314) ;
l'envoi d'un signal de déconnexion de la station d'accueil de dispositif localisée au serveur (316) ; et
en réponse à la réception du signal de déconnexion au niveau du serveur, l'envoi d'un message de déconnexion à l'application.

9. Procédé selon la revendication 8, dans lequel le dispositif portable d'utilisateur a deux états distincts par rapport au serveur, un état non sécurisé et un état sécurisé, et dans lequel l'état sécurisé débute lorsque le serveur associe le dispositif portable d'utilisateur à l'emplacement connu de la station d'accueil de dispositif localisée et le procédé comprenant en outre :
la fin de l'état sécurisé du dispositif portable d'utilisateur lorsque le serveur réinitialise des données d'emplacement pour le dispositif portable d'utilisateur et/ou envoie un message de déconnexion à l'application suite à la réception d'un signal de déconnexion en provenance de la station d'accueil de dispositif localisée.

10. Procédé selon la revendication 9, comprenant en outre :
en réponse à la fin de l'état sécurisé, la fermeture automatique de l'application ou la restriction de fonctionnalité au sein de l'application.

11. Procédé selon l'une quelconque des revendications 6 à 10, dans lequel la détection, par un capteur de proximité dans une station d'accueil de dispositif localisée associée à l'application, d'une proximité d'un dispositif portable d'utilisateur avec la station d'accueil de dispositif localisée comprend :
la détection, par un capteur de proximité dans une station d'accueil de dispositif localisée associée à l'application, d'un dispositif portable d'utilisateur en contact direct avec ou proche de la station d'accueil de dispositif localisée.
